# EUROPÄISCHE PATENTSCHRIFT

(11) **EP 0 486 810 B1**
(45) Veröffentlichungstag und Bekanntmachung des Hinweises auf die Patenterteilung: **15.02.1995**
(21) Anmeldenummer: 91117559.4
(22) Anmeldetag: 15.10.1991
(51) Int. Cl.: C04B 28/10, C04B 22/04

(54) **Putzmischung**
Plastering composition
Composition d'enduit

(30) Priorität: 10.11.1990 DE 4035826
(43) Veröffentlichungstag der Anmeldung: 27.05.1992
(73) Patentinhaber: KOCH MARMORIT GmbH, 79283 Bollschweil (DE)
(72) Erfinder: Banhardt, Volker, Dr. rer. nat. Dipl.-Chem., W-7811 Sulzburg (DE); Benz, Theophil, W-7801 Ehrenkirchen 2 (DE); Paul, Friedrich W., Dipl.-Ing., W-7859 Efringen-Kirchen 6 (DE); Rieger, Fritz, W-7845 Buggingen 2 (DE)
(74) Vertreter: Werner, Hans-Karsten, Dr.Dipl.-Chem.

(56) Entgegenhaltungen:
- DE-A- 2 125 719
- FR-A- 698 320
- FR-A- 1 036 101
- FR-A- 2 317 247
- CHEMICAL ABSTRACTS, vol. 94, no. 26, Columbus, Ohio, US; abstract no. 213212Y, & JP-A-55 158 160

## Beschreibung

Gegenstand der vorliegenden Erfindung ist eine Putzmischung enthaltend Bindemittel, Zuschläge und übliche Zusatzmittel.

Die Erfindung hat sich die Aufgabe gestellt, eine Putzmischung zu entwickeln, welche nach dem Anrühren quillt und nach dem Abbinden eine hohe Porosität aufweist.

Es ist bekannt, Gasbeton herzustellen, indem man Aluminiumpulver zumischt, welches durch Wasserstoffentwicklung im stark alkalischen Medium die Quellung bewirkt. Es handelt sich dabei um eine sehr rasche Reaktion, die etwa eine 50 %ige Vergrößerung des ursprünglichen Volumens bewirkt. Es ist weiterhin bekannt, Aluminiumpulver als Einpreßhilfe für Verpreßmörtel, beispielsweise in Spannkanälen einzusetzen, wobei das Volumen um etwa 10 % zunimmt.

Aus der DE-A-22 39 500 ist bekannt, poröse Formkörper aus Kalkmörtel herzustellen, wobei durch Zusatz von geringen Mengen eines Korrosionsschutzmittels die Gasentwicklung verzögert und die Härtung der Formkörper verbessert wird.

Eigene Versuche der Anmelderin, mit Aluminiumpulver quellende Putzmischungen herzustellen, sind daran gescheitert, daß der Quellvorgang zu rasch eintritt, so daß das Quellen bereits in der Putzmaschine oder im Mörtelschlauch eintritt, wodurch die einwandfreie Verarbeitung unmöglich wird. Weiterhin führt das Aluminiumpulver durch die Bildung von Aluminiumhydroxid zu einer starken Beschleunigung des Zementes, wodurch die Verarbeitung erschwert wird und die Quellung verhindert wird. Dieser Nachteil kann zwar durch übliche Zementverzögerer, wie zum Beispiel organische Säuren, unterdrückt werden, jedoch unterbinden diese nicht das vorzeitige Quellen der Putzmischung in der Putzmaschine und im Mörtelschlauch.

Zunächst wurde festgestellt, daß Zementverzögerer auf Basis von Phosphaten den zusätzlichen Effekt bewirken, die Lösegeschwindigkeit des Aluminiums zu reduzieren, so daß auch die Quellung verzögert wird. Auch derartige phosphatverzögerte Gemische binden im Verhältnis zur Quellung so rasch ab, daß die Quelleffekte bei niedrigen Temperaturen nicht voll wirksam werden. Weiterhin wurde festgestellt, daß der Quellvorgang und die Gasentwicklung wesentlich stärker temperaturabhängig sind als der Abbindevorgang. Im Gegensatz zu Gasbeton oder Verpreßmörtel werden Putzmischungen in relativ dünner Schicht flächig aufgetragen, so daß die jeweilige Außentemperatur wesentlich größeren Einfluß auf den Quellvorgang hat als bei zum Beispiel Gasbeton. Es wurde jetzt gefunden, daß dieser Einfluß der jeweiligen Außentemperatur dadurch erheblich vermindert werden kann, daß man der Putzmischung 5 bis 70 kg/t, vorzugsweise 15 bis 50 kg/t, Branntkalk zusetzt. Dieser bewirkt eine innere Aufheizung des Gemisches und beschleunigt dadurch den Quellvorgang gegenüber dem Abbindevorgang.

Der Zusatz von Branntkalk zu Putzmischungen ist völlig ungewöhnlich. Bisher hat man sich stets darum bemüht, möglichst vollständig abgelöschten Kalk als Bindemittel einzusetzen, da Reste von Branntkalk im Kalkhydrat zu Putzschäden führen können.

Vorzugsweise wird erfindungsgemäß weichgebrannter Kalk verwendet, da dieser rascher reagiert und dadurch besser geeignet ist, die angerührte Putzmischung für die Dauer des Quellvorganges aufzuheizen.

Es ist erfindungsgemäß ohne weiteres möglich, die drei Komponenten Aluminiumpulver, Phosphate und Branntkalk so aufeinander abzustimmen, daß die mit Wasser angerührte und flächig aufgetragene Mischung bei der jeweiligen Außentemperatur 50 bis 100 Minuten lang Temperaturen aufweist zwischen 20 und 30°C und daß das Gemisch in dieser Zeit etwa auf das eineinhalbfache des ursprünglichen Volumens quillt bevor es abbindet. Zunächst werden dazu die Menge an Aluminiumpulver und Phosphatverzögerer aufeinander abgestimmt. Diesen Grundmischungen wird dann mehr oder weniger Branntkalk zugesetzt, um auch bei deutlich niedrigeren oder deutlich höheren Außentemperaturen optimal arbeiten zu können. Es hat sich gezeigt, daß es möglich ist, mit einer Standardmischung einen relativ breiten Bereich der Außentemperaturen zwischen 8 und 25°C abzudecken. Erst bei deutlich niedrigeren oder deutlich höheren Temperaturen sollten Sondermischungen für höhere oder niedrigere Temperaturen zur Anwendung kommen.

Als Bindemittel werden vorzugsweise Gemische aus Portlandzement und Kalkhydrat verwendet. Derartige Bindemittel sind bisher vor allem für festere Putze eingesetzt worden. Die erfindungsgemäße Putzmischung ist zwar weniger fest, jedoch ist dies nur auf den Quellvorgang zurückzuführen. Als Zuschläge werden vorzugsweise Kalksteinmehle und -körnungen mit einer Korngröße von 0 bis 1 mm verwendet. Gröbere Körnungen, wie sie insbesondere für bisher übliche Putzmischungen verwendet wurden, sind weniger geeignet. Sie neigen beim Verarbeiten und Verziehen zum Aufrollen und Aufreißen. Umgekehrt wurden bei Putzmischungen gröberkörnige Zuschlagstoffe bevorzugt, da derartige Putze dann weniger zur Rißbildung neigen. Die Gefahr der Rißbildung ist bei den erfindungsgemäßen Putzen sehr viel geringer, da die gequollene und abgebundene poröse Putzschicht eine relativ hohe Elastizität aufweist.

Als Zusatzmittel können alle üblichen normalen Zusatzmittel zur Anwendung kommen, und zwar auch in den üblichen Mengen. Zu diesen Zusatzmitteln zählen insbesondere Celluloseether, Luftporenbildner, Stärkeether, Hydrophobierungsmittel, welche insgesamt die Verarbeitbarkeit und Haltbarkeit des fertigen Putzes positiv beeinflussen.

Als Aluminiumpulver können insbesondere die für die Gasbeton-Herstellung verwendbaren Qualitäten verwendet werden. Die zugesetzte Menge ist vor allem von der gewünschten Quellwirkung abhängig. Ein Einsatz unter 0,1 kg/t bewirkt eine zu geringe Quellung. Mengen über 1,5 kg/t führen zu schlechter Verarbeitbarkeit und einer zu lockeren Struktur des fertigen Putzes. Besonders bevorzugt sind daher Mengen zwischen 0,2 und 0,6 kg/t.

Die Menge der Phosphatverzögerer hängt in erster Linie von der Menge des zugesetzten Aluminiumpulvers ab, aber auch von der Menge und Qualität des eingesetzten Zements. Die optimalen Mengen können durch einfache Vorversuche ermittelt werden.

Die Menge an Branntkalk liegt für Standardmischungen im Bereich zwischen 20 und 50 kg/t. Für Putzmischungen, die bei höheren Temperaturen als 25°C verarbeitet werden sollen, reichen auch schon Mengen von 5 bis 20 kg/t. Für Putzmischungen, die bei Temperaturen von 0 bis 8°C verarbeitet werden sollen, kann die Menge an Branntkalk bis auf 70 kg/t erhöht werden. Noch höhere Mengen können auch bei der erfindungsgemäßen Putzmischung zu Putzschäden führen. Optimale Ergebnisse erhält man dann, wenn es gelingt, die Materialtemperatur nach dem Anrühren 60 bis 90 Minuten auf ca. 25°C zu halten. Nach dieser Zeit ist das Gemisch meist schon soweit abgebunden, daß ein weiteres Quellen nicht mehr stattfindet.

Die folgenden Standardrezepturen haben sich inzwischen hervorragend bewährt:

| Komponente | Massenteile |
|---|---|
| Kalksteinmehl 0 - 0,1 mm | 300 - 320 |
| Kalksteinmehl 0,1 - 0,3 mm | 300 - 320 |
| Kalksteinkörnung 0,3 - 0,6 mm | 80 - 100 |
| Portlandzement | 170 - 230 |
| Kalkhydrat | 50 - 70 |
| Celluloseether | 1,5 - 2,5 |
| Luftporenbildner | 0 - 0,2 |
| Stärkeether | 0,05 - 0,2 |
| Hydrophobierungsmittel | 1 - 3 |
| Verzögerer | 0,7 - 1,3 |
| Al-Pulver | 0,1 - 1,5 |
| Branntkalk | 15 - 50 |

Die Gesamtmischung ergibt jeweils 1.000 Massenteile.

## Patentansprüche

1. Putzmischung enthaltend Bindemittel, Zuschläge und übliche Zusatzmittel, dadurch gekennzeichnet, daß sie zusätzlich
0,1 bis 1,5 kg/t Aluminiumpulver,
0,1 bis 4,0 kg/t Phosphate und
5,0 bis 70,0 kg/t Branntkalk
enthält.

2. Putzmischung gemäß Anspruch 1, dadurch gekennzeichnet, daß als Bindemittel ein Gemisch aus Portlandzement und Kalkhydrat verwendet wird.

3. Putzmischung gemäß Anspruch 1 oder 2, dadurch gekennzeichnet, daß Zuschläge mit einer Körnung im Bereich von 0 bis 1 mm verwendet werden.

4. Putzmischung gemäß einem der Ansprüche 1 bis 3, dadurch gekennzeichnet, daß als Branntkalk weich gebrannter Kalk verwendet wird.

5. Putzmischung gemäß einem der Ansprüche 1 bis 4, dadurch gekennzeichnet, daß die zusätzlichen Komponenten Aluminiumpulver, Phosphate und Branntkalk so aufeinander abgestimmt sind, daß die mit Wasser angerührte und flächig aufgetragene Putzmischung bei den jeweiligen Außentemperaturen 50 bis 100 Minuten Temperaturen zwischen 20 und 30°C aufweist und während dieser Zeit quillt bevor sie abbindet.

## Claims

1. A plastering composition containing binders, aggregates and conventional additives, characterized in that said composition additionally contains
from 0.1 to 1.5 kg/t aluminium powder,
from 0.1 to 4.0 kg/t phosphates, and
from 5.0 to 70.0 kg/t quicklime.

2. A plastering composition according to claim 1, characterized in that a mixture of Portland cement and lime hydrate is used as the binder.

3. A plastering composition according to claim 1 or 2, characterized in that aggregates are used having a grain sizing in the range of from 0 to 1 mm.

4. A plastering composition according any of claims 1 to 3, characterized in that soft burned lime is used as quicklime.

5. A plastering composition according any of claims 1 to 4, characterized in that the additional components aluminium powder, phosphates, and quicklime have been matched to one another such that at the respective outdoor temperatures the flatly coated plastering composition which had been mixed with water exhibits temperatures of between 20 and 30°C during a period of 50 to 100 minutes and will swell within this period before setting.

## Revendications

1. Composition d'enduit contenant des liants, des charges et des additifs usuels, caractérisée en ce qu'elle contient, en outre :
0,1 à 1,5 kg/t de poudre d'aluminium,
0,1 à 4,0 kg/t de phosphates et
5,0 à 70,0 kg/t de chaux vive.

2. Composition d'enduit selon la revendication 1, caractérisée en ce qu'on utilise, comme liant, un mélange de ciment de Portland et de chaux hydratée.

3. Composition d'enduit selon la revendication 1 ou 2, caractérisée en ce qu'on utilise des charges ayant une dimension de grains comprise entre 0 et 1 mm.

4. Composition d'enduit selon l'une des revendications 1 à 3, caractérisée en ce qu'on utilise, comme chaux vive, de la chaux calcinée en mode doux.

5. Composition d'enduit selon l'une des revendications 1 à 4, caractérisée en ce que les composants supplémentaires, c'est-à-dire la poudre d'aluminium, les phosphates et la chaux vive, sont dosés d'une manière telle que la composition d'enduit délayée avec de l'eau et appliquée à plat présente des témperatures comprises entre 20 et 30°C,selon la température extérieure, pendant 50 à 100 minutes, et, pendant ce temps, elle gonfle avant de prendre.
